# EUROPEAN PATENT APPLICATION

(11) **EP 1 424 755 A1**
(43) Date of publication of application: **02.06.2004**
(21) Application number: 02726481.1
(22) Date of filing: 24.05.2002
(51) Int. Cl.: H02B 1/20, H02G 5/06

(54) **CONDUCTOR CONNECTION STRUCTURE**

(30) Priority: 05.09.2001 JP 2001268788; 10.12.2001 JP 2001375206
(71) Applicant: MITSUBISHI DENKI KABUSHIKI KAISHA, Tokyo 100-8310 (JP)
(72) Inventor: SANO, Kouji, Mitsubishi Denki Kabushiki Kaisha, Tokyo 100-8310 (JP); UENUSHI, Masashi, Mitsubishi Denki Kabushiki K., Tokyo 100-8310 (JP); OKAZAWA, Hiroshi, Mitsubishi Denki Kabushiki K., Tokyo 100-8310 (JP)
(74) Representative: HOFFMANN - EITLE
(86) International application number: PCT/JP2002/005036
(87) International publication number: WO 2003/023920

(57) **Abstract**

A connection structure of a conductor enabling an easy connection with a connection conductor is provided. The connection structure comprises: a metal groove-shaped conductor (5) including a long base (4), and a first sidewall (2) and a second sidewall (3) extending substantially in parallel to each other from side portions of the base (4); and a plate-shaped connection conductor (10) to be connected to the groove-shaped conductor (5). A part of the connection conductor (10) is inserted between the first sidewall (2) and the second sidewall (3) and connected to the first sidewall (2) and the second sidewall (3).

## Description

### Technical Field

The present invention relates to a connection structure of a conductor and, for example, to a connection structure of a bus conductor for use in a switchboard.

### Background Art

Hitherto, a metal plate of square-shape in cross section has been used as a bus conductor, for example, in a switchboard of any electric installation. Since this bus conductor generally conducts a three-phase electric power, three bus conductors are located and horizontally aligned so that longitudinal direction of a cross section thereof may be perpendicular, and mounted and secured onto a support structure via an insulator using a fixture.

The metal plate adapted for a bus conductor is generally a plate extending linearly. Thus, in the case of electrically connecting any electrical equipment such as transformer or power generator to the bus conductor, a connection conductor, which is electrically connected to these electrical equipments, is connected to this metal plate, thereby providing an electrical connection to each electrical equipment, being branched off from the bus conductor.

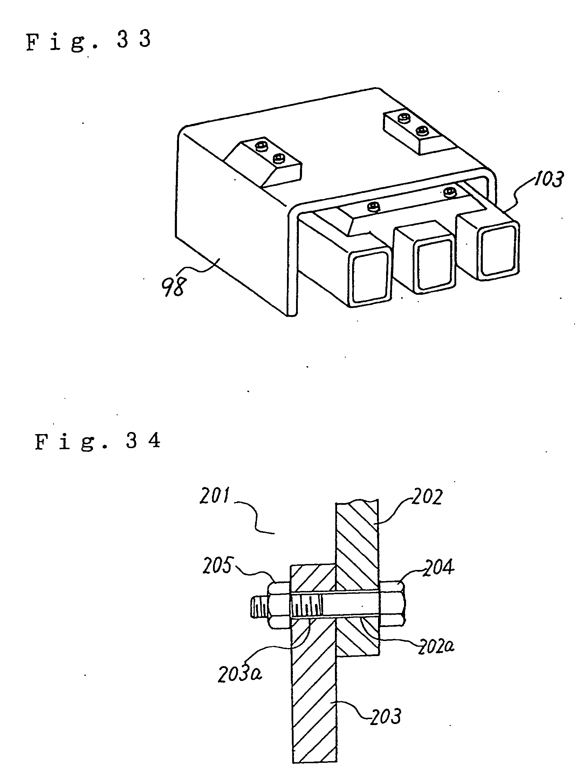

Fig. 34 is a cross sectional view showing a connection structure of a bus conductor in which a connection conductor is connected to a conventional bus conductor. Referring to Fig. 34, a connection structure 201 for a bus conductor is constructed such that a connection conductor 203 of a metal plate is fastened to a bus conductor 202, which is constructed of a metal plate, by means of a bolt 204 and nut 205 acting as a fastener.

The bus conductor 202 is provided with a bolt-through-hole 202a getting through this bus conductor 202, and likewise the connection conductor 203 is provided with a bolt-through-hole 203a getting through this connection conductor 203. Further, single sides of respective metal plates are in contact with each other so that the foregoing bolt-through-hole 202a and bolt-through-hole 203a may be aligned in a superposing manner.

The bolt 204 is inserted through these aligned bolt-through-hole 202a and bolt-through-hole 203a, and a nut 205 is screw-engaged with and fastened onto this bolt 204, whereby a connection state between the bus conductor 202 and the connection conductor 203 is secured.

Thus, at the time of connecting the connection conductor 203 to the bus conductor 202, the bolt 204 and nut 205 acting as fasteners are needed in order to fasten and connect the bus conductor 202 and the connection conductor 203 together. Consequently, a problem exists in that this fastening operation requires labor and time a lot.

Further, a head of the bolt 204 and the nut 205 are protruded from the surface of the bus conductor 202 and surface of the connection conductor 203 respectively in particular at the connection portion between the bus conductor 202 and the connection conductor 203, and therefore an electric field concentration occurs at the head of this bolt 204 and corner of the nut 205. Discharge is liable to occur without acquiring a sufficient distance from members such as peripheral bus conductor, structures at this connection portion. Thus another problem exists in that a correlation distance cannot be shortened and therefore space cannot be utilized effectively.

Furthermore, even if the bus conductor 202 and the connection conductor 203 are coated with any insulating material in order to shorten the correlation distance, the bus conductor 202 and the connection conductor 203 are clamped and connected together at the connection portion by the bolt 204 and the nut 205, which are not coated with any insulating material. Accordingly, these bolt 204 and nut 205 come to establish a reference of distance from the peripheral members, eventually resulting in occurrence of a further problem that a correlation distance cannot be shortened.

Moreover, the bus conductor 202 is supported via an insulator in order to perform to-ground insulation, and therefore a still further problem exists in that it takes trouble and labor to support and secure this bus conductor 202 to the support structures and the like.

Accordingly, the present invention was made to solve the above-discussed problems, and has an object of obtaining a conductor capable of easily connecting to a connection conductor, and obtaining a connection structure of a conductor capable of keeping a distance from the peripheral members such as correlation distance short even in a state that the conductor is connected to the connection conductor.

### Disclosure of Invention

A connection structure of a conductor according to the present invention comprises: a metal groove-shaped conductor including a long base, and a first sidewall and a second sidewall extending substantially in parallel to each other from both side portions of the mentioned base; and a plate-shaped connection conductor connected to the groove-shaped conductor; and in which a part of the mentioned connection conductor is inserted between the mentioned first sidewall and the mentioned second sidewall, and connected to at least one of the mentioned first sidewall and the mentioned second sidewall. As a result, it is possible to easily connect the connection conductor to the groove-shaped conductor, making it possible to connect the connection conductor at a desired position in longitudinal direction of the groove-shaped conductor.

In the mentioned connection structure of a conductor, the groove-shaped conductor is covered with an insulating member tightly close to an outer peripheral surface of the groove-shaped conductor; the insulating member is provided with a support protruding from the outer peripheral surface, a clamp with a part thereof exposed being implanted in said insulating member; and the connection structure is secured to any peripheral support member via said clamp.

As a result, it is possible to mount and secure the connection structure of a conductor onto the peripheral support members easily as well as rapidly.

In the mentioned connection structure of a conductor, a conductive contact possessing elasticity is interposed between the mentioned groove-shaped conductor and the mentioned connection conductor in a state that a part of the mentioned connection conductor is inserted between the mentioned first sidewall and the mentioned second sidewall opposite to each other; and the mentioned conductive contact is connected to the mentioned groove-shaped conductor and the mentioned connection conductor due to an elastic repulsion of the mentioned conductive contact.

As a result, the connection conductor is connected to the groove-shaped conductor easily as well as exactly.

Another connection structure of a conductor according to the invention comprises: first and second metal groove-shaped conductors, each including a long base and a first sidewall and a second sidewall extending substantially in parallel to each other from both side portions of the base; contacts each including a contact part that is fixed to each groove on at least one end side of the mentioned first and second groove-shaped conductors and being deformable due to elasticity; and a connection conductor of which both end portions are capable of coming in contact with or separating from the mentioned contacts respectively.

As a result, it is possible to easily carry out connection between the first and second groove-shaped conductors, and to reduce hours of connection work.

In the mentioned connection structure of a conductor, the mentioned connection conductor is bent at a desired angle with respect to a longitudinal direction.

As a result, it is possible to improve free installation of the groove-shaped conductors in accordance with installation layout.

In the mentioned connection structure of a conductor, the mentioned contact includes: a surface fixed to a bottom of a groove of the mentioned groove-shaped conductor; and a contact part, in which both end portions of the mentioned surface extend with a predetermined spacing toward an opening of the groove of the mentioned groove-shaped conductor, and which is deformable due to elasticity.

As a result, it becomes possible to reduce hours of connection work.

In the mentioned connection structure of a conductor, the mentioned contact includes a cylindrical contact element split circumferentially, and a coil spring that is disposed on an outer circumferential side of the mentioned contact element and holds the mentioned contact element cylindrically due to elasticity.

As a result, it becomes possible to simplify connection work.

In the mentioned connection structure of a conductor, three phases of the mentioned first and second groove-shaped conductors are disposed in parallel at a predetermined interval respectively, and sheathed respectively with a casing integrally formed of a synthetic resin, leaving an opening at a portion where the mentioned contact is disposed.

As a result, it becomes possible to simplify the connection work as a matter of course, and besides acquire a desired inter-phase distance and to-ground distance, thereby enabling the downsizing.

In the mentioned connection structure of a conductor according to the invention, mentioned connection conductor that is connected to the mentioned first and second groove-shaped conductors is sheathed with a heat contraction tube.

As a result, it is possible to perform an insulation protection easily.

In the mentioned connection structure of a conductor, a contact is disposed at a central portion in longitudinal direction of the mentioned first and second groove-shaped conductors.

As a result, it becomes possible to conduct branch connection easily.

In the mentioned connection structure of a conductor, three phases of the mentioned first and second groove-shaped conductors are disposed in parallel each within a compartment of a partition member in which a plurality of partitions form each compartment; the three phases of the mentioned connection conductors are disposed in parallel at a predetermined interval, and sheathed with a casing integrally formed of a synthetic resin, leaving two end portions.

As a result, it is possible to insulate and protect a charge section eventually providing a connection structure of a conductor of high-safety.

### Brief Description of Drawings

Fig. 1 is a cross sectional view showing a connection structure of a conductor according to a first preferred embodiment of the present invention.
Fig. 2 is a cross sectional view taken along a plane perpendicular to a longitudinal direction of a groove-shaped conductor used in the invention.
Fig. 3 is a cross sectional view taken along a plane perpendicular to a longitudinal direction of the other groove-shaped conductor used in the invention.
Fig. 4 is a cross sectional view taken along a plane perpendicular to a longitudinal direction of a bus conductor according to the invention.
Fig. 5 is a cross sectional view taken along a plane perpendicular to a longitudinal direction of the other bus conductor according to the invention.
Figs. 6 (a), (b), (c) and (d) are schematic views each showing a construction of the other bus conductor according to the invention.
Fig. 7 is a perspective view showing a construction of the other bus conductor according to the invention.
Fig. 8 is a perspective view showing a construction of a further bus conductor according to the invention.
Fig. 9 is a cross sectional view showing a connection structure of the other conductor according to the first embodiment of the invention.
Fig. 10 is a cross sectional view showing a construction of a connection structure of a conductor according to a second preferred embodiment of the invention.
Fig. 11 is a cross sectional view showing a construction of a connection structure of the other conductor according to the second embodiment of the invention.
Fig. 12 is a cross sectional view showing a construction of a connection structure of a further conductor according to the second embodiment of the invention.
Fig. 13 is a cross sectional view showing a construction of a connection structure of a still further conductor according to the second embodiment of the invention.
Fig. 14 is a cross sectional view showing construction of a connection structure of a yet further conductor according to the second embodiment of the invention.
Fig. 15 is a perspective view showing a connection structure of a conductor according to a third preferred embodiment of the invention.
Fig. 16 is a perspective view showing a construction of a contact in Fig. 15.
Fig. 17 is a side view showing a fixed state of the contact of Fig. 16.
Fig. 18 is a perspective view showing a connection structure of a conductor according to a fourth preferred embodiment of the invention.
Fig. 19 is a perspective view showing a connection structure of a conductor according to a fifth embodiment of the invention.
Fig. 20 is a perspective view showing a connection structure of a conductor according to a sixth embodiment of the invention.
Fig. 21 is a perspective view showing a connection structure of a conductor according to a seventh embodiment of the invention.
Fig. 22 is a side view taken along the line C-C of Fig. 21.
Fig. 23 is a perspective view showing a construction of a clamp of Fig. 21.
Fig. 24 is a perspective view showing a connection structure of a three-phase one-piece conductor according to an eighth embodiment of the invention.
Fig. 25 is a perspective view showing construction of a three-phase one-piece conductor used in a ninth embodiment of the invention.
Fig. 26 is a bottom view of Fig. 25.
Fig. 27 is a perspective view showing a construction of a three-phase one-piece conductor used in a tenth embodiment of the invention.
Fig. 28 is a perspective view showing a state that the three-phase one-piece conductor of Fig. 27 is used in a switchboard.
Fig. 29 is a perspective view showing a connection structure of a three-phase one-piece conductor according to an eleventh embodiment of the invention.
Fig. 30 is a perspective view showing a connection state between the three-phase one-piece conductors of Fig. 29.
Fig. 31 is a perspective view showing a connection structure of a three-phase one-piece conductor according to a twelfth embodiment of the invention.
Fig. 32 is a side view showing a construction of the three-phase one-piece conductor of Fig. 31.
Fig. 33 is a perspective view showing a connection state between the three-phase one-piece conductor and the three-phase one-piece connection conductor of Fig. 31.
Fig. 34 is a cross sectional view showing a connection structure of a conventional bus conductor.

### Best Mode for Carrying out the Invention

### Embodiment 1.

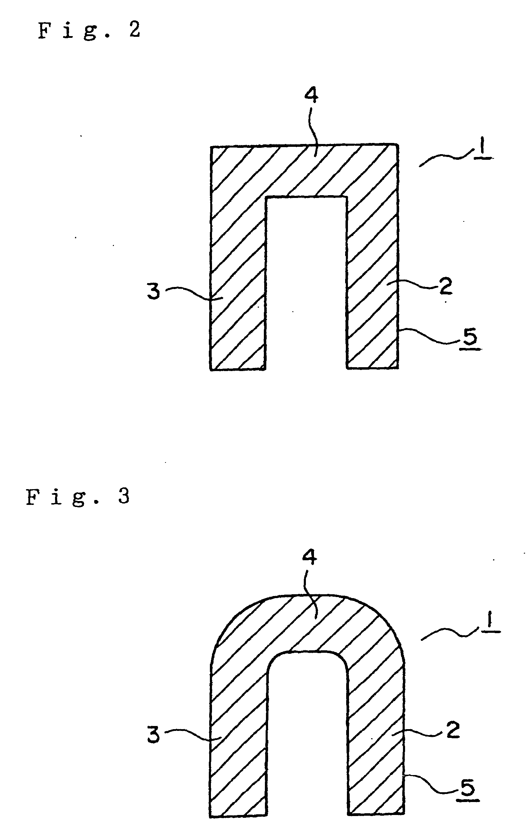

Fig. 2 is a cross sectional view taken along a plane perpendicular to a longitudinal direction of a groove-shaped conductor for use in the present invention. In the drawing, a groove-shaped conductor 5 includes a plate-like long base 4, and a first sidewall 2 and a second sidewall 3 extending from both side portions of this base 4 so as to be substantially parallel to each other. The groove-shaped conductor 5 is made of a conductive metal such as copper. The groove-shaped conductor 5 is used as a bus conductor 1 in a switchboard.

In the case where the groove-shaped conductor 5 of such construction is connected to a plate-shaped connection conductor, which is electrically connected to a transformer or the like, the connection conductor and the groove-shaped conductor 5 come in contact to each other and can be electrically connected just by inserting the foregoing connection conductor from an open portion on the side opposite to the base 4 to between the first sidewall 2 and the second sidewall 3 of the groove-shaped conductor 5. Accordingly, the connection conductor can be connected to this groove-shaped conductor 5 easily at any position of the groove-shaped conductor 5. However, it is preferable that thickness of the connection conductor is substantially the same as length between the first sidewall 2 and second sidewall 3 at such level that the connection conductor may be inserted between the first sidewall 2 and second sidewall 3, and held between the first sidewall 2 and second sidewall 3.

In addition, it is preferable that a corner portion between the base 4 and the first sidewall 2 on the outer peripheral surface of the groove-shaped conductor 5 is a curved surface, or a corner portion between the base 4 and the second sidewall 3 on the outer peripheral surface of the groove-shaped conductor 5 is a curved surface. It is also preferable, as shown in Fig. 3, that the outer peripheral surfaces of both of these corner portions are curved surfaces. As a result of such curved surfaces of the outer peripheral surfaces, an advantage is obtained in that the connection conductor can be easily connected to the groove-shaped conductor 5 at any position. Moreover, since the outer peripheral surfaces are the curved surfaces, an electric field concentration, which is likely to occur at the corner portions, is reduced, thereby diminishing the likelihood of a dielectric breakdown and enabling to shorten a distance between the groove-shaped conductor 5 (that is, the bus conductor 1) and the peripheral members.

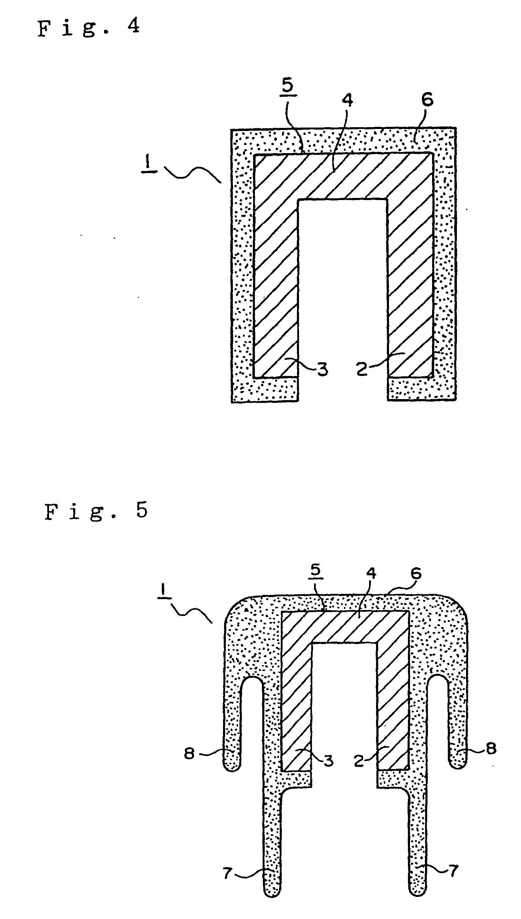

Fig. 4 is a cross sectional view taken along a plane perpendicular to a longitudinal direction of a bus conductor according to the invention. In the drawing, the bus conductor 1 comprises the groove-shaped conductor 5 and an insulating member 6 covering this groove-shaped conductor 5 tightly close to an outer peripheral surface thereof. In addition, construction of the groove-shaped conductor 5 is the same as that described referring to Fig. 2.

The insulating member 6 is made of a material possessing an electric insulation such as epoxy resin. This insulating member 6 is not provided on surfaces of the first sidewall 2 and second sidewall 3 opposite to each other and on an inside surface of the base 4, but is provided on surfaces of the groove-shaped conductor other than these surfaces.

In the bus conductor 1 of such construction, the opposite surfaces between the first sidewall 2 and second sidewall 3 are exposed to each other, and therefore the connection conductor can come in contact with the groove-shaped conductor 5 to achieve the same advantage as in the case of Fig. 2. Further, an outer peripheral surfaces of the groove-shaped conductor 5 is covered with the insulating member 6, and a creepage distance for insulation between the groove-shaped conductor 5 and the peripheral member can be made larger so that the groove-shaped conductor 5 may get close to the peripheral members.

Furthermore, as shown in Fig. 5, it is preferable that the insulating member 6 is constructed such that protrusions 7 and 8 extend from the surface thereof. Such construction can make a creepage distance for insulation larger with these protrusions 7 and 8, and can shorten the distance between the groove-shaped conductor 5 and the peripheral member. Besides, in the case where the connection conductor is connected to this bus conductor 1, the protrusion 7 is interposed between the connection conductor and the peripheral member, and the protrusion 7 performs function to suppress discharge between the foregoing connection conductor and peripheral member thereby enabling to shorten a distance between the connection conductor and the peripheral member. Although Fig. 5 is a view showing a construction in which the protrusions 7 and 8 extend in the same direction as the first sidewall 2 and second sidewall 3, direction of extension is not limited to this. If only the distance between the groove-shaped conductor 5 and the peripheral member is not less than a distance value obtained by multiplying 16mm/kv, being a reference of a creepage distance for insulation by a rated voltage, the protrusions may be directed in any direction.

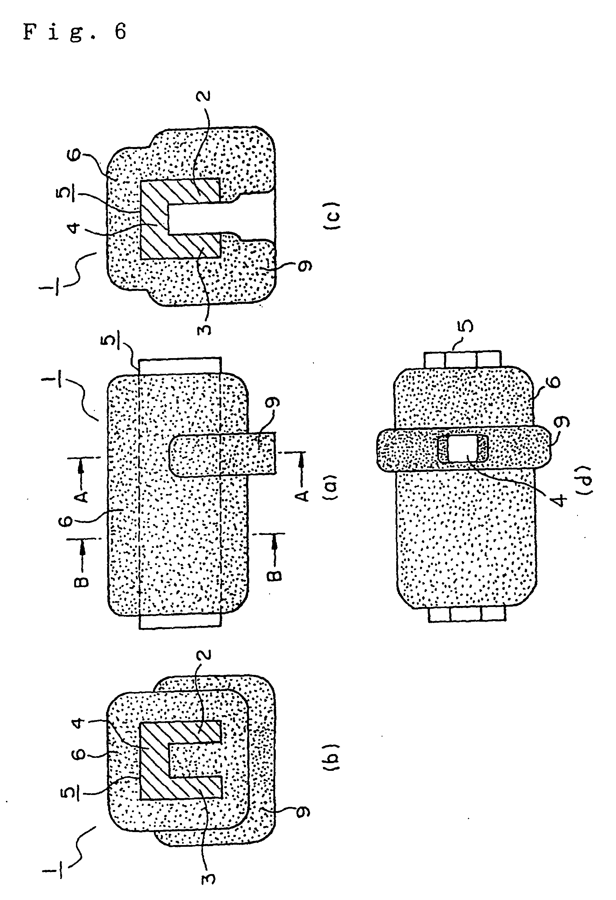

Figs. 6 (a), (b), (c) and (d) are views each showing a construction of the other bus conductor according to the invention, and in which Fig. 6(a) is an elevation view, Fig. 6(b) is a cross sectional view taken in the direction indicated by arrows along the line B-B of Fig. 6(a), Fig. 6(c) is a cross sectional view taken in the direction indicated by arrows along the line A-A of Fig. 6(a), and Fig. 6(d) is a bottom view of Fig. 6(a). With reference to Figs. 6, a bus conductor 1 comprises the groove-shaped conductor 5 and the insulating member 6 covering this groove-shaped conductor 5 tightly close to the groove-shaped conductor 5. The groove-shaped conductor 5 is constructed in the same manner as shown in Fig. 2.

The insulating member 6 covers this groove-shaped conductor 5 tightly close to all the surfaces of the groove-shaped conductor 5, except for the connection portions of the bus conductor 1 to be connected to the connection conductor. Although portions of the bus conductor 1 to be connected to the connection conductor are also covered with the protrusion 9, the insulating member 6 is also open at an open portion of the groove-shaped conductor 5 (lower side of the groove-shaped conductor 5 in Fig. 6(d)). Respective facing surfaces of the first sidewall 2 and second sidewall 3 of the groove-shaped conductor 5 and an inside surface of the base 4 are exposed at the foregoing connection portions.

In the bus conductor 1 of such construction, in the case where the connection conductor is connected to this bus conductor 1, the connection conductor is inserted from the open portion of the above-mentioned insulating member 6 toward the grove-shaped conductor 5 so as to bring the connection conductor into contact with the exposed portions of the groove-shaped conductor 5, thereby achieving connection between the bus conductor 1 and the connection conductor. Thus, the same advantage as in the construction shown in Fig. 4 is achieved. Additionally, since the groove-shaped conductor 5 is entirely covered with the insulating member 6 at the connection portions after inserting the connection conductor into this bus conductor 1 thereby completing the connection, the distance from the peripheral members to over the whole bus conductor 1 including this connection portion can be shortened.

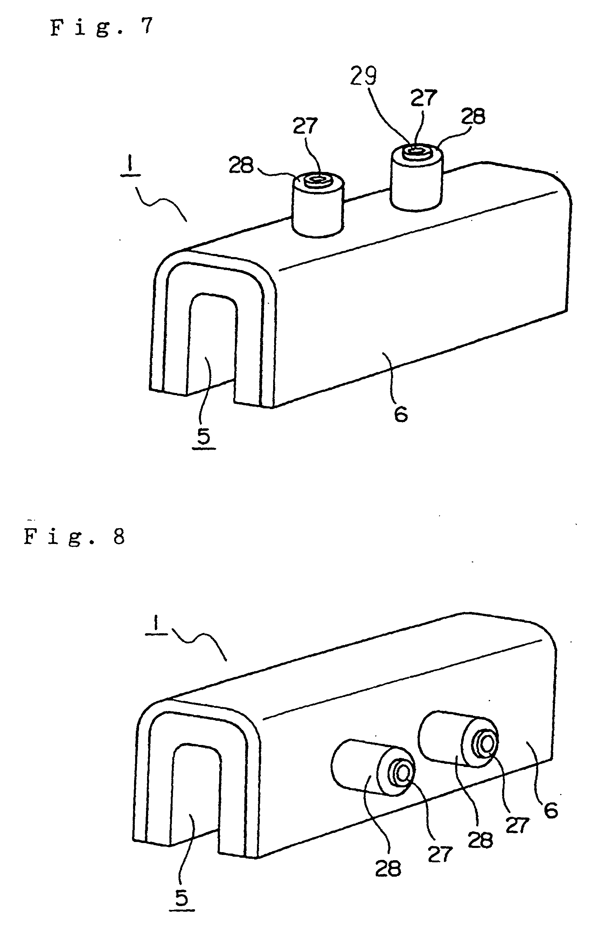

Fig. 7 is a perspective view showing a construction of the other bus conductor according to this invention. In the drawing, a bus conductor 1 comprises the groove-shaped conductor 5 and the insulating member 6 covering the groove-shaped conductor 5 tightly close to an outer peripheral surface of this groove-shaped conductor 5. The groove-shaped conductor 5 has the same construction as in the construction shown in Fig. 3, and the groove-shaped conductor 5, of which outer peripheral surfaces of both corner portions are curved surfaces, is employed.

The insulating member 6 is provided with an insulation support 28 extending from an outer peripheral surface. Further, a clamp 27 is implanted with a part thereof exposed in the support 28. The clamp 27 is substantially a bell-shaped metal, and implanted into the support 28 so that an apex of this bell configuration may be upside down. A plurality of ring-shaped grooves, which are parallel to a bottom surface of the bell configuration, are formed on an outer circumferential surface of this clamp 27 to prevent the clamp 27 from being slipped off from the support 28. Furthermore, the bottom surface of the clamp 27 is exposed from the support 28, and a bolt hole 29 is formed at this bottom surface. The support 28 is integrally formed of the same material as that of the insulating member 6, and holds the clamp 27. Since the support 28 of the insulating member 6 is interposed between the clamp 27 and the groove-shaped conductor 5, the clamp 27 and the groove-shaped conductor 5 are electrically isolated. The support 28 is provided on the insulating member 6 on the base 4 side of the groove-shaped conductor 5, and mounted on the peripheral support members by screw-engaging a bolt or the like into the bolt hole 29 of the clamp 27. Then the bus conductor 1 is suspended from the peripheral support members to be supported.

The bus conductor 1 of such construction achieves the same advantage as in the construction shown in Fig. 4. Additionally, in mounting the bus conductor 1 on the peripheral support members, e.g., the bolt has only to be screw-engaged into the bolt hole 29 of the clamp 27. Thus, it is unnecessary to mount the bus conductor 1 via any insulator or the like, thereby enabling to mount the bus conductor 1 on the support members easily and rapidly.

Furthermore, as shown in Fig. 8, even if the support 28 is provided on the insulating member 6 on the first sidewall 2 side of the groove-shaped conductor 5, or is provided on the insulating member 6 on the second sidewall 3 side, the support 28 can be supported on the side face of the bus conductor 1 so that the same advantage is achieved.

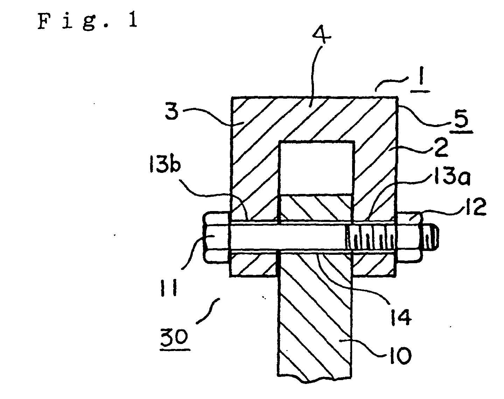

Fig. 1 is a cross sectional view showing a connection structure of a conductor according to the first preferred embodiment of this invention. In the drawing, a connection structure 30 of a conductor comprises a groove-shaped conductor 5 and a plate-shaped connection conductor 10 connected to this groove-shaped conductor 5. The groove-shaped conductor 5 is used as a bus conductor 1. A first sidewall 2 of this groove-shaped conductor 5 is provided with a first bolt-through-hole 13a, and a second sidewall 3 thereof is provided with a second bolt-through-hole 13b. These first bolt-through-hole 13a and second bolt-through-hole 13b are provided at a portion where the connection conductor 10 is inserted between the first sidewall 2 and second sidewall 3 of the groove-shaped conductor 5. The other construction of the bus conductor 1 is the same as in the construction shown in Fig. 2.

The connection conductor 10 is a plate-shaped metal and provided with a connection conductor bolt-through-hole 14. This connection conductor 10 is inserted between the first sidewall 2 and second sidewall 3. The connection conductor bolt-through-hole 14 is sandwiched between the first bolt-through-hole 13a and the second bolt-through-hole 13b, and these through holes are substantially aligned in order of the first bolt-through-hole 13a, the connection bolt-through-hole 14 and the second bolt-through-hole 13b.

The connection structure 30 of a conductor comprises a bolt 11 and a nut 12 acting as a fastener as well. The bolt 11 gets through the aligned first bolt-through-hole 13a, the connection conductor bolt-through-hole 14 and the second bolt-through-hole 13b, and the nut 12 is screw-engaged with a thread portion opposite to a head of this bolt 11. The first sidewall 2, the connection conductor 10 and the second sidewall 3, which are sandwiched between the head of the bolt 11 and the nut 12, are tightened by this bolt 11 and nut 12 to be completely fastened.

In the connection structure 30 of such construction, since the first sidewall 2 and second sidewall 3 are in contact with both side faces of the connection conductor 10 respectively to sandwich the connection conductor 10 between them, the connection conductor 10 is secured to the bus conductor 1 (groove-shaped conductor 5) exactly and stably. Further, a contact area between the bus conductor 1 and the connection conductor 10 increases, a power supply becomes smooth, and a heat generation due to lack of the contact area is suppressed.

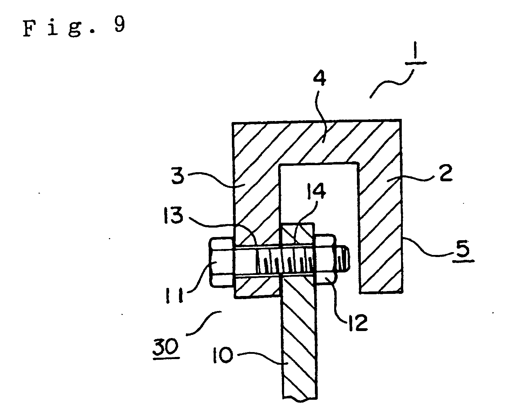

In addition, in the case where a plate thickness of the connection conductor 10 is sufficiently smaller than length between the first sidewall 2 and second sidewall 3, it is preferable that the connection conductor 10 is secured to the bus conductor 1 in the following manner. That is, as shown in Fig. 9, the connection conductor 10 is inserted between the first sidewall 2 and second sidewall 3, the bolt-through-hole 13 provided in the second sidewall 3 is aligned with the connection conductor bolt-through-hole 14 provided in the connection conductor 10, and the bolt 11 and nut 12 are fastened thereto, whereby the connection conductor 10 is secured to the bus conductor 1 (groove-shaped conductor 5) to acquire a contact pressure with each other.

### Embodiment 2.

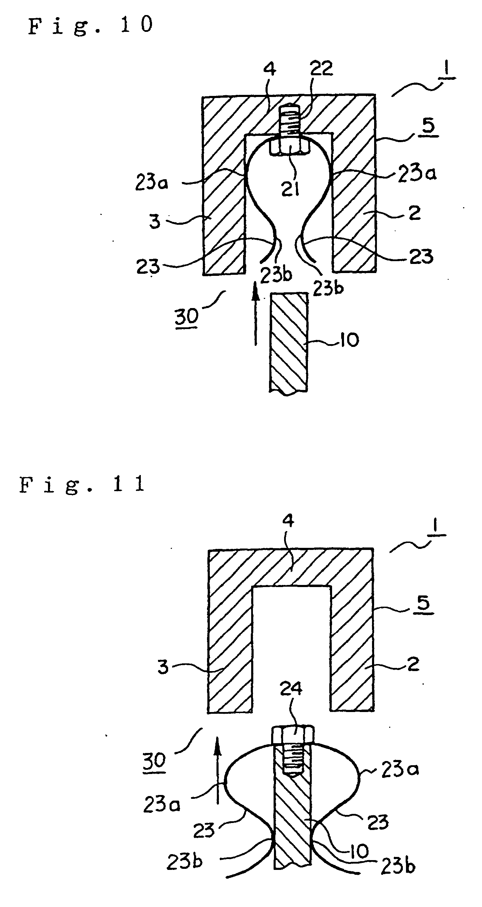

Fig. 10 is a cross sectional view showing construction of a connection structure of a conductor according to a second preferred embodiment of the invention. In the drawing, a connection structure 30 of a conductor comprises a groove-shaped conductor 5 and a connection conductor 10 inserted between a first sidewall 2 and a second sidewall 3 of this groove-shaped conductor 5. The drawing shows a state shortly before the connection conductor 10 is inserted in the groove-shaped conductor 5. When inserting the connection conductor 10 between the first sidewall 2 and second sidewall 3 of the groove-shaped conductor 5, the connection structure 30 of a conductor is established. The connection structure 30 of a conductor comprises a Ω-shaped spring contact 23, which is a conductive contact possessing elasticity. The Ω-shaped spring contact 23 is secured to a base 4 of the groove-shaped conductor 5 with an open portion faced toward an open side of the groove-shaped conductor 5. This fixation is achieved by screw-engaging a bolt 21 into a bolt hole 22 provided in the base 4. The Ω-shaped spring contact 23 includes enlarged portions 23a, which are separate from each other and enlarged, and narrowed portions 23b, which come close to each other and narrowed in the vicinity of the open portion. In the state that the connection conductor 10 is inserted between the first sidewall 2 and second sidewall 3, in other words, in the state that the connection conductor 10 is connected to the bus conductor 1, an end of the connection conductor 10 is in contact with the bolt 21 screw-engaged with the base 4. Further, the enlarged portions 23a are in contact with the first sidewall 2 and second sidewall 3, and the narrowed portions 23b sandwiches the connection conductor 10 between them and are in contact with both side faces of this connection conductor 10. In the state that the connection conductor 10 is not inserted between the first sidewall 2 and second sidewall 3, the distance between the narrowed portions 23b is smaller than a plate thickness of the connection conductor 10, and therefore the distance between the narrowed portions 23b comes to be larger up to a plate thickness of the connection conductor 10 by inserting the connection conductor 10 therebetween. The Ω-shaped spring contact 23 possessing elasticity generates an elastic repulsion tending to restore to the origin state. The narrowed portions 23b are mutually pressed into contact with both side faces of the connection conductor 10 and sandwich them to hold the connection conductor 10 in the bus conductor 1.

In the connection structure 30 of a conductor of above construction, the connection conductor 10 is inserted between the narrowed portions 23b of the Ω-shaped spring contact 23, which face to each other, and this insertion makes the distance between the narrowed portions 23b larger. Therefore, respective narrowed portions 23 sandwich the connection conductor 10 due to elastic repulsion of the Ω-shaped spring contact 23, thereby the connection conductor 10 being held. Accordingly, the connection conductor 10 is connected to the bus conductor 1 (i.e., groove-shaped conductor 5) easily just by inserting the connection conductor 10 between the narrowed portions 23b.

Since the connection conductor 10 is in contact with each narrowed portion 23b of the Ω-shaped spring contact 23 and the bolt 21 at three points, a contact state required for conduction can be achieved.

In addition, as shown Fig. 11, it is also preferable that a connection structure is arranged in the following manner. That is, the connection conductor 10 is inserted between the narrowed portions 23b, and the Ω-shaped spring contact 23 is secured to an end of the connection conductor 10 by means of a bolt 24. The narrowed portions 23b are in contact with both side faces of the connection conductor 10, and the distance between respective enlarged portions 23a is larger than the distance between the first sidewall 2 and second sidewall 3. In this construction, as the connection conductor 10 is inserted between the first sidewall 2 and second sidewall 3, the distance between respective enlarged portions 23s comes to be smaller while respective enlarged portions 23a being in contact along the first sidewall and second sidewall 3. Thus, respective narrowed portions 23b move on while being in contact with both side faces of the connection conductor 10, whereby the Ω-shaped spring contact 23 is deformed. This deformation of the Ω-shaped spring contact 23 causes the Ω-shaped spring contact 23 to generate an elastic repulsion serving as restoring force thereof, thereby respective enlarged portions 23a tending to be separate from each other. This elastic repulsion tending to be separate from each other causes respective enlarged portions 23a to press the first sidewall 2 and second sidewall 3, thereby causing the bus conductor 1 to hold the connection conductor 1. Thus, the connection conductor 10 can be easily attached and detached from the bus conductor 1 (i.e., groove-shaped conductor 5).

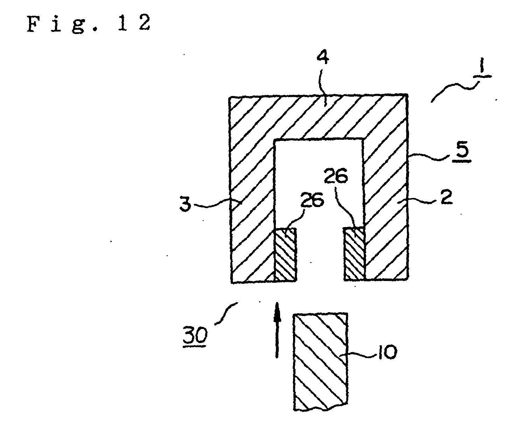

Further, as shown in Fig. 12, it is also preferable that a connection structure 30 is arranged in the following manner. A multi-contact 26 (Registered Trademark of Multi-Contact Co., Ltd.) is employed as a conductive contact, and this multi-contact is provided on each surface of the first sidewall 2 and second sidewall 3 opposite to each other. The distance between the faces opposite to each other of these multi-contacts 26 becomes smaller than a plate thickness of the connection conductor 10. The multi-contact 26 is an assembly composed of a plurality of strip-shaped conductive metals possessing elasticity. The multi-contacts 26 opposite to each other sandwich and hold the connection conductor 10 due to elastic repulsion of the conductive metal generated by deformation of the connection conductor 10 due to contact pressure. Thus, also in this construction, the connection conductor 10 can be easily attached and detached from the bus conductor 1 (i.e., groove-shaped conductor 5).

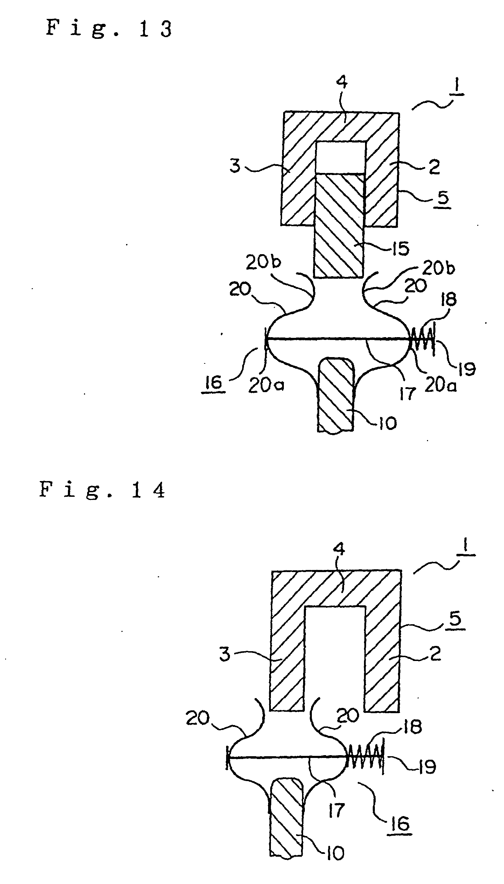

In addition, as a further example, it is preferable that a connection structure 30 is constructed in the following manner. That is, as shown in Fig. 13, an auxiliary plate 15 possessing conductivity is fixed between the first sidewall 2 and second sidewall 3, and both sides of a spring-equipped Ω-shaped conductive contact 16, which is provided at the connection conductor 10, sandwich the auxiliary plate 15 therebetween, thereby holding the connection conductor 10 in the bus conductor 1. The spring-equipped Ω-shaped conductive contact 16 includes arms 20 formed into Ω shape and pressing means 19 for giving an impetus to enlarged portions 20a of these arms 20, which are central portions separate from and opposite to each other, so as to come close to each other respectively. The pressing means 19 includes a shaft 17 getting through each enlarged portion 20a, and a spring 18, which allows this shaft 17 to extend therethrough and presses the enlarged portions 20a from outside due to elastic repulsion. Both ends of this shaft 17 are members for preventing the shaft 17 from being slipped off. Further, the distance between narrowed portions 20b, which are close and opposite to each other in the vicinity of a leading edge of each arm 20, is smaller than a plate thickness of the auxiliary plate 15. Also in case of arranging the connection structure 30 of such construction, when the connection conductor 10 is pushed in so as to insert the auxiliary plate 15 between respective narrowed portions 20b, the spring 18 is compressed owing to increase in distance between respective enlarged portions 20a accompanied by increase in distance between the narrowed portions 20b. Due to an elastic repulsion against this compression, the connection conductor 10 is held at the bus conductor 1. Accordingly, the arms 20 need not to possess any elasticity.

In addition, even if the connection structure has construction in which the auxiliary plate 15 is removed, as shown in Fig. 14, either the first sidewall 2 or the second sidewall 3 is inserted between respective narrowed portions 20b of the spring-equipped Ω-shaped conductive contact 16, whereby likewise the connection conductor 10 is easily held at the bus conductor 1.

### Embodiment 3.

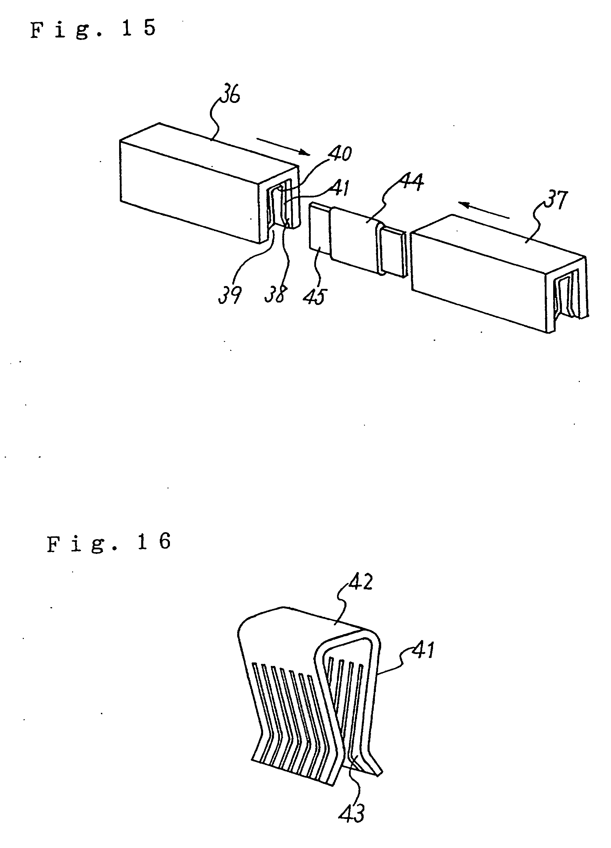

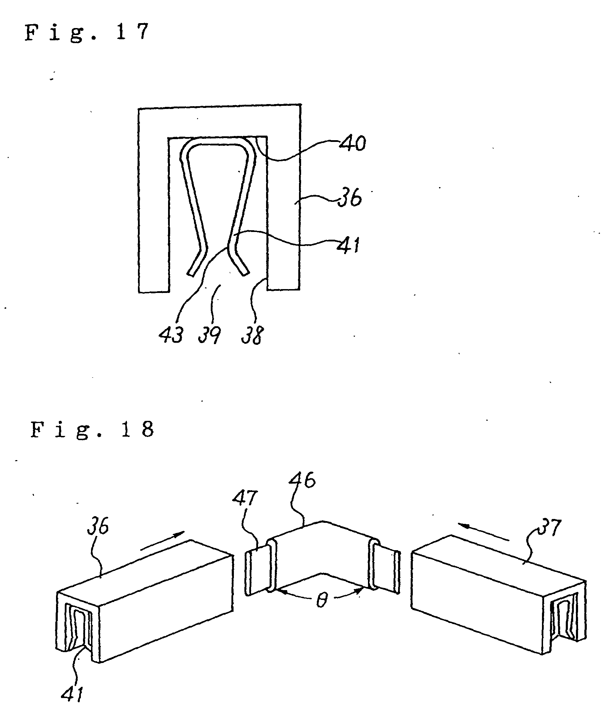

Fig. 15 is a perspective view showing a connection structure of a conductor according to a third preferred embodiment of the invention, Fig. 16 is a perspective view showing a construction of a contact in Fig. 15, and Fig. 17 is a side view showing a fixed state of the contact of Fig. 2.

Referring to Fig. 15, a first metal groove-shaped conductor 36 includes a long base, and a first sidewall and a second sidewall extending substantially in parallel to each other from both side portions of this base. A second metal groove-shaped conductor 37 also includes a long base, and a fist sidewall and a second sidewall extending substantially in parallel to each other from both side portions of this base. A contact 41 is fixed to a bottom 40 of each groove 38 of respective groove-shaped conductors 36 and 37.

The contact 41, as shown in Fig. 16, comprises a surface 42, which is fixed to the bottom 40 of the groove 38, and a contact portion 43 formed by extending both end portions thereof at a predetermined spacing toward an opening 39 of the groove 38 so as to be deformable due to elasticity.

It is a connection conductor 44 that provides a connection between respective groove-shaped conductors 36, 37. This connection conductor 44 has a predetermined thickness. Further, a predetermined long part at both lengthwise end portions of the connection conductor 44 is formed to be smaller in thickness than that of a central portion, thereby forming a contact part 45 to be in contact with the contact 41.

In the connection structure of a conductor formed as described above, for example, the first groove-shaped conductor 36 is pushed in so that the contact 41 may be capped on one side of the connection conductor 44, as indicated by the arrow in Fig. 15, whereby the first groove-shaped conductor 36 is connected to the connection conductor 44 via respective contact parts 43, 45. Likewise the second groove-shaped conductor 37 is pushed in so as to cap on the other side of the connection conductor 44 as indicated by the arrow in the drawing, whereby the second groove-shaped conductor 37 is connected to the connection conductor 44 via respective contact parts 43, 45. In this manner, both of the groove-shaped conductors 36 and 37 are connected together.

As described above, according to this third embodiment., since the contact 41 is located respectively in the groove 38 of the first and second groove-shaped conductors 36 and 37, and the first and second groove-shaped conductors 36 and 37 are connected together via the connection conductor 44, it is possible to achieve easily a connection between the first and second groove-shaped conductors 36 and 37, eventually reduction in hours of connection work. In addition, it is also preferable that the contact 41, which is located respectively in the groove 38 of the first and second groove-shaped conductors 36 and 37, is not disposed along the full length of the first and second groove-shaped conductors 36 and 37, but is provided only at respective end portions on the connection conductor 44 side.

### Embodiment 4.

Fig. 18 is a perspective view showing a connection structure of a conductor according to a fourth preferred embodiment of the invention. In the drawing, the same reference numerals are designated to like parts in the foregoing third embodiment, and further description thereof is omitted. It is a connection conductor 46 that provides a connection between the first and second groove-shaped conductors 36 and 37. This connection conductor 46 has a predetermined thickness, and a central portion thereof is bent at a predetermined angle θ with respect to the longitudinal direction. Further, a predetermined long part of the connection conductor 46 at both end portions is formed so as to be smaller in thickness than that of a central portion, and a contact part 47 capable of being in contact with the contact 41 is formed.

As described above, according to this fourth embodiment, since the connection conductor 46 is constructed such that the connection conductor 46 is bent at an angle θ, it is possible to reduce hours of connection work, and improve free installation of the groove-shaped conductors in accordance with installation layout.

### Embodiment 5.

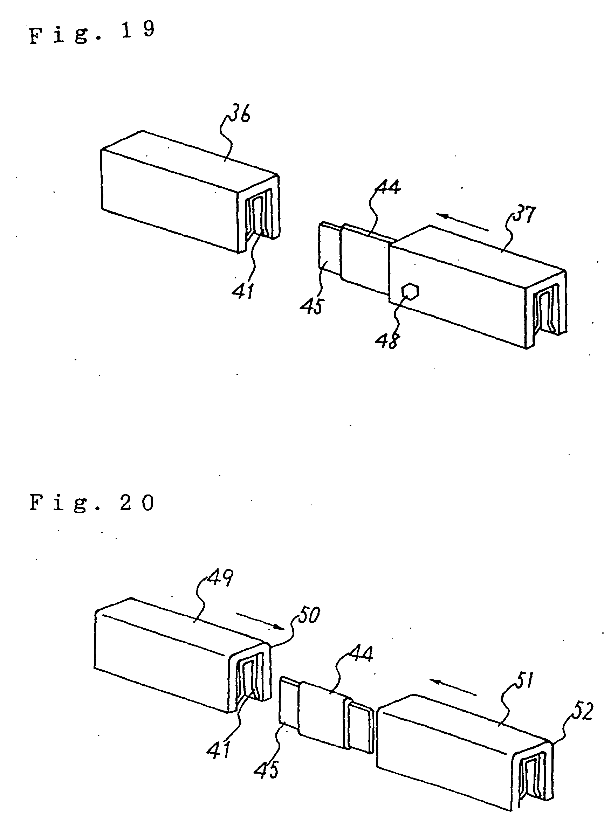

Fig. 19 is a perspective view showing a connection structure of a conductor according to a fifth preferred embodiment of this invention. In the drawing, the same reference numerals are designated to like parts in the foregoing third embodiment, and further description thereof is omitted. In this fifth embodiment, one end side of a connection conductor 44 is inserted into one end portion of a second groove-shaped conductor 37, and secured thereto by a fixing member 48 such as bolt in a state of being connected to the contact 41, whereby the connection conductor 44 and the second groove-shaped conductor 37 form an integral unit.

As described above, according to this fifth embodiment, since the connection conductor 44 is secured to one end portion of the second groove-shaped conductor 37, it is possible to reduce hours of connection work at the time of connecting the first groove-shaped conductor 36 to the second groove-shaped conductor 37 to which the connection conductor 44 is secured via the connection conductor 44.

### Embodiment 6.

Fig. 20 is a perspective view showing a connection structure of a conductor according to a sixth preferred embodiment of this invention. In the drawing, the same reference numerals are designated to like parts in the third embodiment, and further description thereof is omitted. A first groove-shaped conductor 49 is formed in an arc-shape (round) at an outside corner portion 50. Further, the contact 41 is fixed to a bottom of a groove at both end portions. A second groove-shaped conductor 51 is also formed in arc-shape at an outside corner portion 52. Further, the contact 41 is fixed to a bottom of a groove at both end portions.

As described above, according to this sixth embodiment, since the outside corner portions 50, 52 of the first and second groove-shaped conductors 49, 51 are formed in an arc-shape, it is possible to reduce an electric field effect given by both conductors 49, 51 to a surrounding area. Furthermore, in the case where the field effect to the surrounding area is particularly large, the arcs can be formed larger thereby enhancing an electric field distribution.

### Embodiment 7.

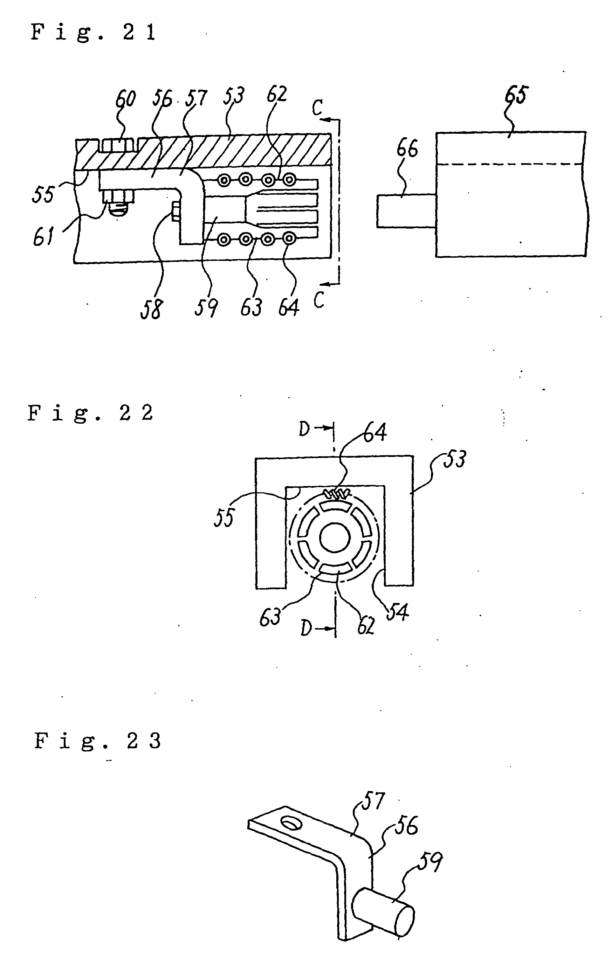

Fig. 21 is a cross sectional view showing a connection structure of a conductor according to a seventh preferred embodiment of this invention, and is taken along the line D-D of Fig. 22. Fig. 22 is a side view taken along the line C-C of Fig. 21. Fig. 23 is a perspective view showing a construction of a clamp in Fig. 21.

In the drawings, a clamp 56 is secured to a bottom 55 of a groove 54 of a first groove-shaped conductor 53 by means of a bolt 60 and a nut 61. This clamp 56, as shown in Fig. 23, is comprised of a bracket 57 formed into an L-shape and a contact shaft 59, which is secured to this bracket 57 with a bolt 58 and has a predetermined diameter.

A cylindrical contact 62 is formed in the following manner. That is, one end side of the cylindrical contact 62 is secured to the clamp, a plurality of contact elements 63, which are formed by splitting in a circumferential direction, are disposed forming a cylindrical shape, and a plurality of coil springs 64 are disposed in axial direction on an outer circumferential side of respective contact elements 63. A second groove-shaped conductor 65 is provided with a contact shaft 66, which is fixed to one end side of the second groove-shaped conductor 65 and capable of being in contact with or separating from the contact 62.

In the connection structure of a conductor constructed as described above, as shown in Fig. 21, one end portion of the contact 62 is enlarged and the contact shaft 59 is inserted therein, whereby the contact 62 presses the contact shaft 59 into contact under a predetermined contact pressure due to compression applied by the coil spring 64. Further, the contact shaft 66 is inserted into the contact 62, whereby the second groove-shaped conductor 65 is connected to the first groove-shaped conductor 53 under a predetermined contact pressure.

As described above, according to this seventh embodiment, the cylindrical contact 62, in which a plurality of coil springs 64 are disposed in axial direction on an outer circumferential side of a plurality of contact elements 63 disposed forming an arc, is secured to the first groove-shaped conductor 53 via the clamp 56. Further the contact shaft 66 is fixed to the second groove-shaped conductor 65. As a result, it is possible to achieve a connection through one-touch operation in the case of connecting the second groove-shaped conductor 65 to the first groove-shaped conductor 53, thereby enabling to reduce hours of connection work.

### Embodiment 8.

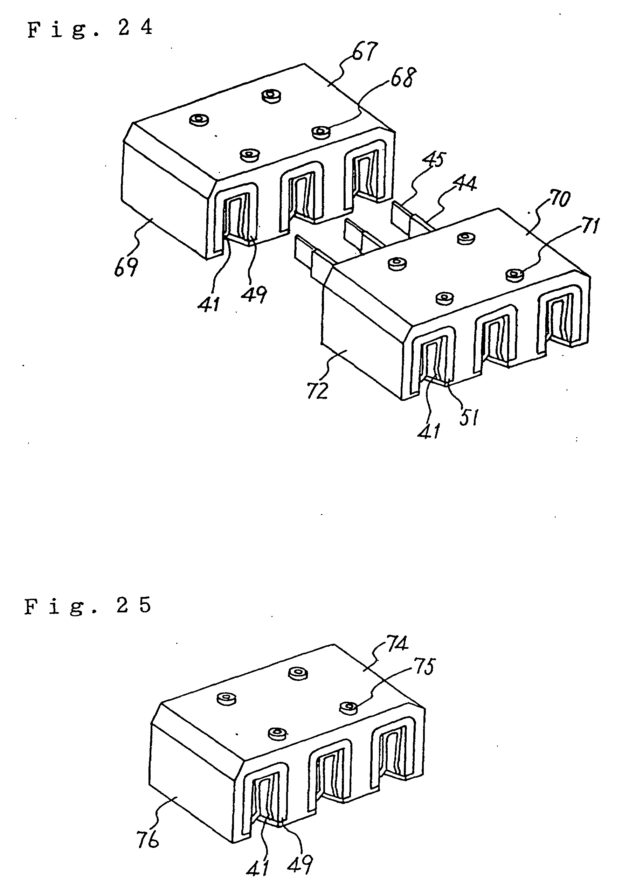

Fig. 24 is a perspective view showing a connection structure for a three-phase one-piece conductor according to an eighth preferred embodiment of the invention. In the drawing, the same reference numerals are designated to like parts in the foregoing third embodiment, and further description thereof is omitted.

As shown in the drawing, three phases of first groove-shaped conductors 49 are disposed in parallel at a predetermined interval, and a casing 67 is integrally molded of a synthetic resin such as epoxy, leaving grooves of the first groove-shaped conductor 49 respectively. A plurality of filler metals 68 provided with screws are implanted at a surface on the side different from respective first groove-shaped conductors 49 side. Then, the above-mentioned members 49, 67 and 68 form a first three-phase one-piece conductor 69, in which those members are insulated from each other.

Besides, three phases of second groove-shaped conductors 51 are also disposed in parallel at a predetermined interval, and a casing 70 is integrally molded of a synthetic resin such as epoxy, leaving grooves of the second groove-shaped conductor 51 respectively. A plurality of filler metals 71 provided with screws are implanted at a surface on the side different from respective groove-shaped conductors 51. Then, the above-mentioned members 51, 70 and 71 form a second a three-phase one-piece conductor 72, in which those members are insulated from each other.

Then, for example, as shown in the drawing, a connection between respective connection conductors 44 and the first three-phase one-piece conductor 69 is carried out in a state that respective connection conductors 44 are connected to the second three-phase one-piece conductor 72.

As described above, according to this eighth embodiment, three phases of groove-shaped conductors 49, 51 are integrally molded of an insulating synthetic resin respectively to form the first and second three-phase one-piece conductors, thereby enabling to not only simplify connection work but also acquire a desired inter-phase distance and to-ground distance, eventually resulting in downsizing of switchboard.

### Embodiment 9.

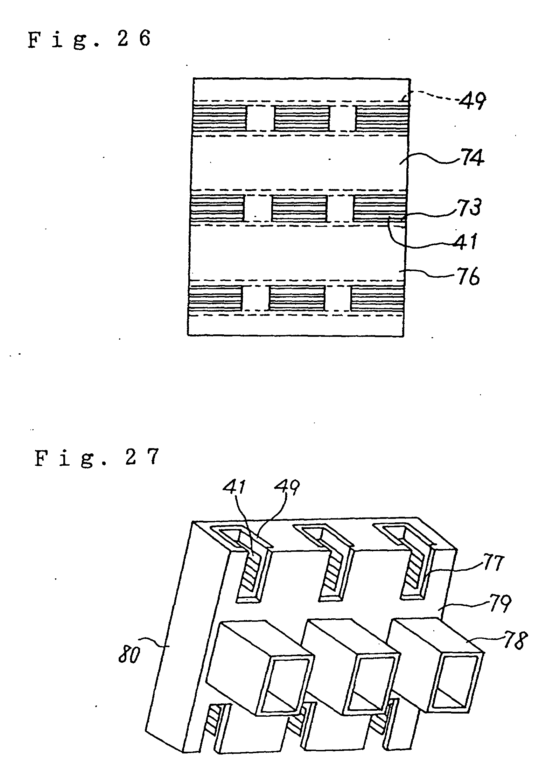

Fig. 25 is a perspective view showing a structure of a three-phase one-piece conductor used in a ninth preferred embodiment of the invention. Fig. 26 is a bottom view of Fig. 25. In the drawings, the same reference numerals are designated to like parts in the foregoing sixth embodiment, and further description thereof is omitted.

As shown in each drawing, a contact 41 is secured to both ends and central portion of a groove-shaped conductor 49, and three phases of these groove-shaped conductors 49 are disposed in parallel at a predetermined interval. Leaving an opening 73 at a portion where each contact 41 of each groove-shaped conductor 49 is disposed, an outer peripheral portion is integrally molded of a synthetic resin such as epoxy thereby forming a casing 74. A plurality of filler metals 75 provided with screws are implanted at a surface of the casing 74 on the side different from respective groove-shaped conductors 49. Then, the above-mentioned members 49, 74 and 75 form a three-phase one-piece conductor 76, in which those members are insulated from each other.

As described above, according to this ninth embodiment, since the contacts 41 are fixed respectively at both ends and central portion of the grooves of the groove-shaped conductor 49, it is possible to easily carry out connection between the conductors with the contacts 41 located at both ends, as well as to utilize the contact 41 located at a central portion for a branch connection.

### Embodiment 10.

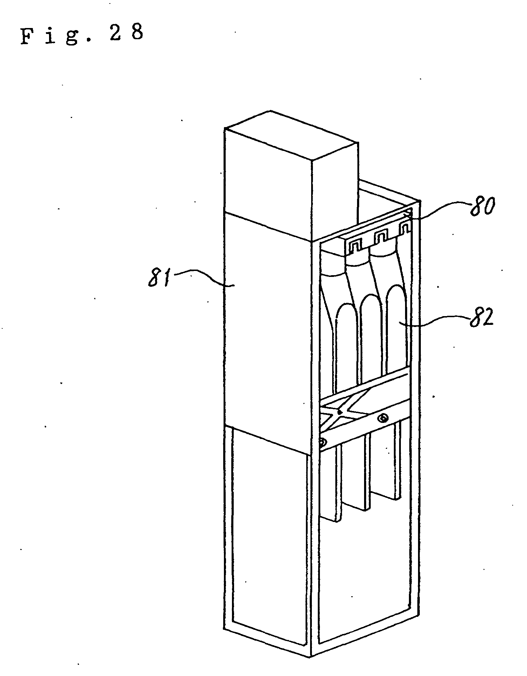

Fig. 27 is a perspective view showing a structure of a three-phase one-piece conductor used in a tenth preferred embodiment of the invention, and Fig. 28 is a perspective view showing a state of using the three-phase one-piece conductor of Fig. 27 in a switchboard. In the drawings, the same reference numerals are designated to parts like in the foregoing ninth embodiment, and further description thereof is omitted.

As shown in Fig. 27, three phases of groove-shaped conductors 49 are disposed in parallel at a predetermined interval. A casing 79 is formed by integral molding of a synthetic resin such as epoxy so that an opening 77 may be formed respectively at portions where the contacts 41 are disposed at both ends of the groove-shaped conductor 49, and the opening 77 and a protrusion 78 protruding for a predetermined length circumferentially around the opening 77 may be formed at portions where the contacts 41 of the central portion are disposed. Then the above-mentioned members 41, 49 and 77-79 form a three-phase one-piece conductor 80, in which the contact 41 at the central portion is covered with the protrusion 78.

The three-phase one-piece conductor 80 formed as described above is, for example, as shown in Fig. 28, mounted on an upper side portion of a switchboard 81, and is used as the three-phase one-piece conductor 80 for a bus line connection. The contacts 41 located at both end portions, not shown, are used for being connected to a power supply side and the other switchboard, and the contact 41 located at the central portion is connected to a breaker 82 within the protrusion 78.

As described above, according to this tenth embodiment, since the contacts 41 are disposed respectively at both end portions and at a central portion of the groove-shaped conductor 49, and the contact 41 located at the central portion is covered with the protrusion 78, it is easy to making a connection, and it is possible to prevent a charge section of the branch connection portion from being exposed.

### Embodiment 11.

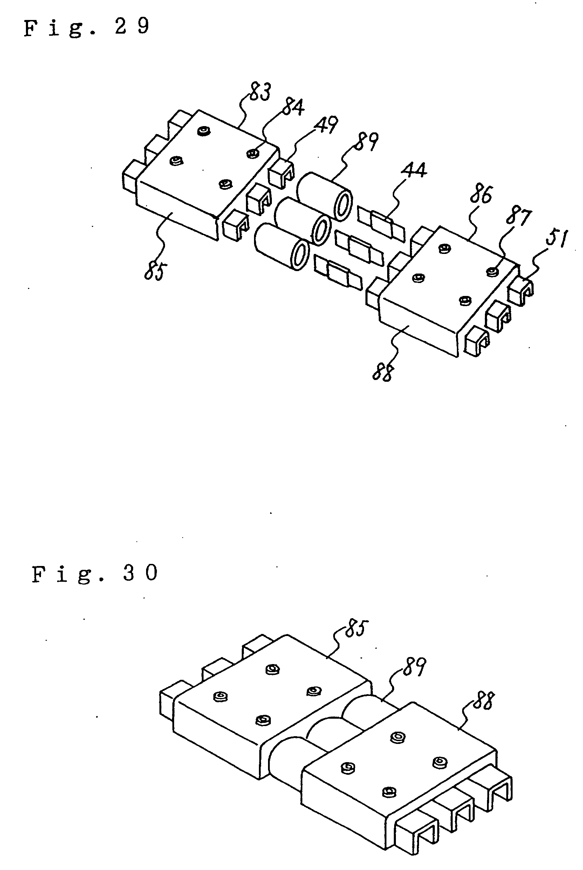

Fig. 29 is a perspective view showing a connection structure for a three-phase one-piece conductor according to an eleventh preferred embodiment of the invention and Fig. 30 is a perspective view showing a connection state between the three-phase one-piece conductors of Fig. 29. In the drawings, the same reference numerals are designates to parts like in the foregoing sixth embodiment, and further description thereof is omitted.

As shown in Fig. 29, three phases of the first groove-shaped conductors 49 are disposed in parallel at a predetermined interval, and an outer peripheral portion is integrally molded of a synthetic resin such as epoxy, leaving both end portions of each groove-shaped conductor by a predetermined length to form a casing 83. Filler metals 84 provided with screws are implanted at a surface of the casing 83 on the side different from the grooves of the conductor 49. Then the above-mentioned members 49, 83 and 84 form a first three-phase one-piece conductor 85.

Three phases of second groove-shaped conductors 51 are likewise disposed in parallel at a predetermined interval, and an outer peripheral portion is integrally molded of a synthetic resin such as epoxy, leaving both end portions of each conductor by a predetermined length to form a casing 86. Filler metals 87 provided with screws are implanted at a surface of the casing 86 on the side different from the grooves of the conductor 51. Then the above-mentioned members 51, 86 and 87 form a second three-phase one-piece conductor 88. Reference numeral 89 designates an insulating heat contraction tube, of which inside diameter has such a diameter as can be inserted into each end portion of respective groove-shaped conductors 49, 51. This insulating heat contraction tube 89 is formed to have a predetermined length.

In the connection structure between the three-phase one-piece conductors constructed as described above, for example, in the case where the first three-phase one-piece conductor 85 is used as a stationary side, each connection conductor 44 is connected to each groove-shaped conductor 49 of the first three-phase one-piece conductor 85. Then, an exterior of each connection conductor 44 and each groove-shaped conductor 49 is capped with the heat contraction tube 89 respectively. Subsequently, each groove-shaped conductor 51 of the second three-phase one-piece conductor 88 is connected to the connection conductor 44 within the heat contraction tube 89.

Further, as shown in Fig. 30, the heat contraction tube 89 is heated to contract so as to be in conformity with at least an outside diameter of respective groove-shaped conductors 49, 51 under a state that both end portions of the heat contraction tube 89 are capped on the outer periphery of respective groove-shaped conductors 49, 51. Thus the first and second three-phase one-piece conductors 85, 88 are connected integrally via the connection conductor 44. The heat contraction tube 89 integrally insulates the connection portions including each groove-shaped conductor 49, 51 of respective three-phase one-piece conductors 85, 88.

As described above, according to this eleventh embodiment, since a portion between exposed parts of each groove-shape conductor 49, 51 connected by the connection conductor 44 of the first and second three-phase one-piece conductors 85, 88 is sheathed with the heat contraction tube 89, it is possible to perform protection between the boards by insulation.

### Embodiment 12.

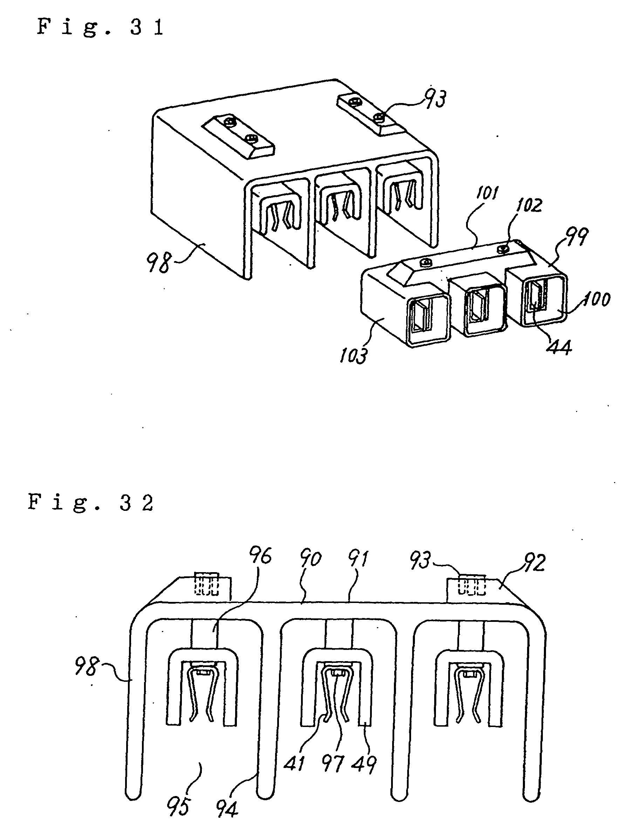

Fig. 31 is a perspective view showing a connection structure for a three-phase one-piece conductor according to a twelfth preferred embodiment of the invention. Fig. 32 is a side view showing a construction of the three-phase one-piece conductor of Fig. 31. Fig. 33 is a perspective view showing a connection state between the three-phase one-piece conductor and a three-phase one-piece connection conductor of Fig. 31. In the drawings, the same reference numerals are designated to parts like in the foregoing sixth embodiment, and further description thereof is omitted.

Referring to each drawing, a partition member 90 is integrally molded of a synthetic resin possessing an insulation performance such as epoxy. The partition member 90 is provided with a pedestal 91, and mounting seats 92, each protruding via an interval at a predetermined position of this pedestal 91, and in which a filler metal 93 provided with a screw is implanted. Further, compartments 95 for three phases are formed at the pedestal 91 with a plurality of partitions 94 each extending for a predetermined length in perpendicular direction on the side different from the mounting seats 92. A plurality of filler metals 96 provided with screws are implanted in the pedestal 91 respectively at positions with a predetermined distance from end portions within each compartment 95. A groove-shaped conductor 49 is located respectively at each filler metal 96, and secured to the pedestal 90 via the filler metal 96 with a bolt 97 along with a contact 41 disposed within the groove-shaped conductor 49. Thus, the above-mentioned members 41, 49 and 90-97 form a three-phase one-piece conductor 98.

A casing 99 is molded of a synthetic resin such as epoxy, and is comprised of a square-shaped tubular portion 100 and a mounting seat 101. The mounting seat 101 is formed so as to connect respective tubular portions 100, and filler metals 102 provided with screws are implanted at a predetermined interval on the side different from each tubular portion 100. A connection conductor 44 is embedded in each tubular portion 100 so as to be capable of being connected to the groove-shaped conductor 49 at both end portions. Thus, the members 44 and 99-102 form a three-phase one-piece connection conductor 103.

In the connection structure of a conductor formed as described above, the three-phase one-piece conductor 98 is connected integrally with the three-phase one-piece connection conductor 103, located at an upper portion of the switchboard, not shown, and connected to the other switch board in a manner of three phases in one unit via the three-phase one-piece connection conductor 103, as shown in Fig. 33.

As described above, according to this twelfth embodiment, since respective groove-shaped conductors 49 are partitioned into blocks by means of the partition member 90 provided with the partitions 94, and each connection conductor 44 is enclosed with the casing 99, it is possible to form a connection portion for a conductor of high-safety without exposing of a charge section.

### Embodiment 13.

Although structures in which a groove of a groove-shaped conductor is disposed downward are described in any of the foregoing embodiments, it is a matter of course to obtain the same advantages as in each of the above-mentioned embodiments even in the case where the groove-shaped conductor is disposed upward or in horizontal direction.

### Industrial Applicability

The present invention is preferred in cases where a groove-shaped conductor is employed as a bus conductor used in a switchboard and the like, and a connection conductor is employed as a connection conductor to be connected to the bus conductor.

## Claims

1. A connection structure of a conductor comprising: a metal groove-shaped conductor (5) including a long base (4), and a first sidewall (2) and a second sidewall (3) extending substantially in parallel to each other from both side portions of said base (4); and a plate-shaped connection conductor (10) connected to said groove-shaped conductor (5);
wherein a part of said connection conductor (10) is inserted between said first sidewall (2) and said second sidewall (3), and connected to at least one of said first sidewall (2) and said second sidewall (3).

2. The connection structure of a conductor according to claim 1, wherein said groove-shaped conductor (5) is covered with an insulating member (6) tightly close to an outer peripheral surface of said groove-shaped conductor (5) ; said insulating member (6) is provided with a support (28) protruding from the outer peripheral surface, a clamp (27) with a part thereof exposed being implanted in said insulating member (6); and the connection structure is secured to any peripheral support member via said clamp (27).

3. The connection structure of a conductor according to claim 1, wherein said connection conductor (10) is fastened to at least one of said first sidewall (2) and said second sidewall (3) by means of a fastener.

4. The connection structure of a conductor according to claim 1, wherein a conductive contact (23) (26) possessing elasticity is interposed between said groove-shaped conductor (5) and said connection conductor (10) in a state that a part of said connection conductor (10) is inserted between said first sidewall (2) and said second sidewall (3) opposite to each other; and said conductive contact (23) (26) is connected to said groove-shaped conductor (5) and said connection conductor (10) due to an elastic repulsion of said conductive contact (23) (26).

5. The connection structure of a conductor according to claim 4, wherein said conductive contact (23) (26) is secured to said groove-shaped conductor (5).

6. The connection structure of a conductor according to claim 4, said conductive contact (23) is secured to said connection conductor (10).

7. The connection structure of a conductor according to claim 1, wherein said groove-shaped conductor (5) is a bus conductor used in a switchboard.

8. A connection structure of a conductor comprising: ametal groove-shaped conductor (5) including a long base (4), and a first sidewall (2) and a second sidewall (3) extending substantially in parallel to each other from both side portions of said base (4); a plate-shaped connection conductor (10) connected to said groove-shaped conductor (5); and a Ω-shaped conductive contact (16) including a contact part that is secured to said connection conductor (10) and is deformable due to elasticity;
wherein said conductive contact (16) sandwiches said groove-shaped conductor (5) due to elastic repulsion to provide connection between said groove-shaped conductor (5) and said connection conductor (10).

9. A connection structure of a conductor comprising: first and second metal groove-shaped conductors (36)(37), each including a long base and a first sidewall and a second sidewall extending substantially in parallel to each other from both side portions of the base; contacts (41) each including a contact part (43) that is fixed to each groove (38) on at least one end side of said first and second groove-shaped conductors (36)(37) and being deformable due to elasticity; and a connection conductor (44) of which both end portions are capable of coming in contact with or separating from said contacts (41) respectively.

10. The connection structure of a conductor according to claim 9, wherein said connection conductor (46) is bent at a desired angle with respect to longitudinal direction.

11. The connection structure of a conductor according to claim 9, wherein one end portion of said connection conductor (44) is secured to said contact (41) of either of said first or second groove-shaped conductors (36)(37).

12. The connection structure of a conductor according to claim 9, wherein said first and second groove-shaped conductors (49) (51) are formed in arc at an outside corner portion thereof.

13. The connection structure of a conductor according to claim 9, wherein said contact (41) includes a surface fixed to a bottom (40) of a groove (38) of said groove-shaped conductors (36) (37) ; and a contact part (43), in which both end portions of said surface extend with a predetermined spacing toward an opening (39) of the groove (38) of said groove-shaped conductors (37) (37), and which is deformable due to elasticity.

14. The connection structure of a conductor according to claim 9, wherein said contact (62) includes a cylindrical contact element (63) split circumferentially, and a coil spring (64) that is disposed on an outer circumferential side of said contact element (63) and holds said contact element (63) cylindrically due to elasticity.

15. The connection structure of a conductor according to claim 9, wherein three phases of said first and second groove-shaped conductors (49) (51) are disposed in parallel at a predetermined interval respectively, and sheathed respectively with a casing (67) (70) (74) (79) (83) (86) integrally formed of a synthetic resin, leaving an opening (73)(77) at a portion where said contact (41) is disposed.

16. The connection structure of a conductor according to claim 15, wherein said connection conductor (44) to be connected to said first and second groove-shaped conductors (49) (51) is sheathed with a heat contraction tube (89).

17. The connection structure of a conductor according to claim 15, wherein a contact (41) is disposed at a central portion in longitudinal direction of said first and second groove-shaped conductors (49)(51).

18. The connection structure of a conductor according to claim 17, wherein said casing (79) is formed so as to protrude cylindrically in the area surrounding the opening (77) where said contact (41) is disposed at the central portion.

19. The connection structure of a conductor according to claim 9, wherein three phases of said first and second groove-shaped conductors (49)(51) are disposed in parallel each within a compartment (95) of a partition member (90) in which a plurality of partitions (94) form each compartment (95) ; the three phases of said connection conductors (44) are disposed in parallel at a predetermined interval, and sheathed with a casing (99) integrally formed of a synthetic resin, leaving two end portions.

20. The connection structure of a conductor according to claim 9, wherein said groove-shaped conductor is a conductor used in a switchboard.
